# EUROPÄISCHE PATENTSCHRIFT

(11) **EP 3 655 747 B1**
(45) Veröffentlichungstag und Bekanntmachung des Hinweises auf die Patenterteilung: **10.09.2025**
(21) Anmeldenummer: 18740827.3
(22) Anmeldetag: 13.07.2018
(51) Int. Cl.: G01N 1/22

(54) **VERBINDUNGSVORRICHTUNG FÜR EIN ABGASMESSSYSTEM**
CONNECTING DEVICE FOR AN EXHAUST GAS MEASURING SYSTEM
DISPOSITIF DE RACCORDEMENT POUR SYSTÈME DE MESURE DES GAZ D'ÉCHAPPEMENT

(30) Priorität: 17.07.2017 DE 102017212164
(43) Veröffentlichungstag der Anmeldung: 27.05.2020
(73) Patentinhaber: Robert Bosch GmbH, 70442 Stuttgart (DE)
(72) Erfinder: MAI, Hans, 73035 Goeppingen (DE); MOUIL SIL, Ghislain, 70825 Korntal-Muenchingen (DE); BREGANSKI, Frank, 72770 Reutlingen (DE); HAAGA, Gerhard, 73275 Ohmden (DE); VIEHMANN, Christian, 73669 Lichtenwald (DE)
(86) Internationale Anmeldenummer: PCT/EP2018/069136
(87) Internationale Veröffentlichungsnummer: WO 2019/016098

(56) Entgegenhaltungen:
- EP-A1- 2 428 263
- CN-A- 105 865 853
- GB-A- 2 475 097
- JP-A- 2016 010 794
- US-A- 5 490 868
- US-A1- 2011 059 432
- US-A1- 2013 133 308
- US-A1- 2015 101 995
- US-B1- 6 308 130

## Beschreibung

Die Erfindung betrifft Verbindungsvorrichtung zum Verbinden einer Abgassonde mit einem Abgasmessgerät sowie ein Abgasmesssystem mit einer derartigen Verbindungsvorrichtung.

### Stand der Technik

Bei Prüf- und Diagnoseverfahren für Verbrennungsmotoren, die in Fahrzeugen installiert sind, werden häufig Messgrößen verwendet, welche die Gaskonzentration der ausgeschiedenen Verbrennungsgase charakterisieren.

Um diese Messgrößen zu bestimmen, werden mit Hilfe einer Abgassonde Abgase am Auspuff des Verbrennungsmotors entnommen und einem Abgasmessgerät zugeführt.

Insbesondere bei Fahrzeugen mit Dieselmotor enthalten die Abgase neben gasförmigen Komponenten wie zum Beispiel HC, CO, CO₂, O₂, NOₓ auch eine relevante Menge fester Bestandteile (Partikel), insbesondere Rußpartikel, die zu einer starken Verschmutzung der Messkammer des Abgasmessgeräts führen.

Eine Verschmutzung der Messkammer hat fehlerhafte Messergebnisse zur Folge und kann es erforderlich machen, die in der Messkammer verbaute Messzelle auszutauschen.

Daher sind bei der Messung partikel behafteter Gase, wie sie insbesondere bei Dieselmotoren auftreten, besondere Schutzmaßnahmen für die Gaszuführung zum Abgasmessgerät erforderlich.

Ein Gaszuführungssystem umfasst daher üblicherweise mehrere Filtereinheiten, die am Messgerät angebaut sind.

Aus dem Dokument EP 2 428 263 A1 ist eine Abgas-Messvorrichtung bekannt, die ein Filterschlauchsystem umfasst. Das Filterschlauchsystem verfügt über einen Filter, der mit einem Anschlussabschnitt und Filterkupplungsbuchsen mit zwei Sätzen von Öffnungen zum Halten des Anschlussabschnitts bzw. eines Schlauchanschlusses ausgestattet ist. Weitere Messvorrichtungen sind aus den Dokumenten US 5 490 868 A und US 6 308 130 B1 bekannt.

### Offenbarung der Erfindung:

Es ist eine Aufgabe der Erfindung, eine verbesserte Abgaszuführung von einer Abgassonde zu einem Abgasmessgerät, insbesondere zum Zuführen von Abgasen eines Dieselmotors, bereitzustellen. Dies wird durch eine Verbindungsvorrichtung gemäß Anspruch 1 und eine Verwendung gemäß Anspruch 12 erreicht.

Gemäß der Erfindung umfasst eine Verbindungsvorrichtung zum Verbinden einer Abgassonde mit einem Abgasmessgerät wenigstens einen hocheffizienten Schwebstofffilter (HEPA-Feinfilter), der ausgebildet ist, Partikel aus einem Abgasstrom, der durch die Verbindungsvorrichtung von der Abgassonde zum Abgasmessgerät strömt, herauszufiltern.

Ausführungsbeispiele der Erfindung umfassen auch ein Abgasmesssystem mit einem Abgasmessgerät, einer Abgassonde und einer Verbindungsvorrichtung gemäß der Erfindung, wobei die Verbindungsvorrichtung die Abgassonde mit dem Abgasmessgerät verbindet, um eine Abgasströmung von der Abgassonde zu dem Abgasmessgerät zu ermöglichen.

Das Abgasmessgerät kann insbesondere zur Messung von Abgasen eines Ottomotors ausgebildet sein. Durch eine erfindungsgemäße Verbindungsvorrichtung werden die in den Abgasen eines Verbrennungsmotors, insbesondere eines Dieselmotors, enthaltene Partikel effizient herausgefiltert. Daher kann auch ein Abgasmessgerät, das ursprünglich zur Messung von Abgasen eines Ottomotors ausgebildet ist, zum Messen von Abgasen eines Dieselmotors verwendet werden.

Durch ein HEPA-Feinfilter werden auch sehr kleine Partikel aus dem Abgasstrom entfernt und führen nicht zu einer Verschmutzung des Abgasmessgeräts. Ein HEPA-Filter hat eine hohe Effizienz und Lebensdauer. Daher muss das Filter nur selten ausgetauscht werden und die Wartungskosten können reduziert werden.

Dadurch, dass ein Filterelement, das ein HEPA-Feinfilter enthält, ("HEPA-Feinfilterelement") in die Verbindungsvorrichtung integriert ist, wird deren Handhabung vereinfacht. Darüber hinaus wird die Stabilität der Verbindungsvorrichtung verbessert und ihre Lebensdauer erhöht.

In einer Ausführungsform umfasst die Verbindungsvorrichtung drei Verbindungssegmente, und das Filterelement ist zwischen zwei Verbindungssegmenten angeordnet. Auf diese Weise kann ein Filterelement einfach und leicht austauschbar in die Verbindungsvorrichtung integriert werden.

In einer Ausführungsform weist das Filterelement wenigstens ein Ansatzstück auf, und wenigstens ein Verbindungssegment der Verbindungsvorrichtung ist auf das wenigstens eine Ansatzstück aufgeschoben. Auf diese Weise kann ein Filterelement auf einfache Weise so in die Verbindungsvorrichtung integriert werden, dass die Schnittstelle zwischen dem Filterelement und dem Verbindungssegment gasdicht und mechanisch stabil ist und das Filterelement einfach ausgetauscht werden kann. Das wenigstens eine Ansatzstück kann insbesondere rohrförmig ausgebildet sein.

In einer Ausführungsform ist das Filterelement als sogenanntes "In-Line-Filterelement" ausgebildet. Das heißt, die Durchmesser der Ansatzstücke am Eingang und Ausgang des Filterelements sind so gewählt, dass sich das Filterelement direkt in eines der Verbindungssegmente der Verbindungsvorrichtung einstecken lässt. Insbesondere sind keine geschraubten Verbindungen zu den benachbarten Verbindungssegmenten erforderlich. Die Montage und der Austausch der Filterelemente werden dadurch erheblich vereinfacht.

In einer Ausführungsform ist das Verbindungssegment als Schlauchsegment ausgebildet, insbesondere als elastisches und bewegliches Schlauchsegment. Das Schlauchsegment kann insbesondere aus einem Material gefertigt sein, das ein Elastomer, insbesondere ein Fluorelastomer, beispielsweise VITON^{®}, enthält.

Ein elastisches Schlauchsegment ermöglicht aufgrund seiner Flexibilität eine einfache Handhabung der Verbindungsvorrichtung und eine zuverlässig gasdichte Verbindung zwischen dem Verbindungssegment und dem Filterelement.

In einer Ausführungsform ist zusätzlich wenigstens ein Grobfilterelement in die Verbindungsvorrichtung integriert. Das wenigstens eine Grobfilterelement ist insbesondere in der Strömungsrichtung der Abgase vor dem wenigstens einen HEPA-Feinfilterelement angeordnet.

Ein in der Strömungsrichtung der Abgase vor dem HEPA-Feinfilterelement angeordnete Grobfilterelement verhindert, dass das HEPA-Feinfilterelement durch grobe Partikel schnell verschmutzt und blockiert wird.

Das Grobfilterelement kann mit einem kostengünstigen Papierfilter ausgebildet sein.

Die Größe des Feinfilterelements wird so gewählt, dass es möglichst klein ist und seine Abmessungen insbesondere in etwas den Abmessungen des Grobfilterelements entsprechen.

In einer Ausführungsform ist die Länge der Verbindungssegmente der Verbindungsvorrichtung so gewählt, dass das HEPA-Feinfilterelement im praktischen Betrieb nicht auf dem Boden liegt und somit gut vor Beschädigungen geschützt ist.

In einer Ausführungsform umfasst die Verbindungsvorrichtung in Richtung der Abgasströmung ein Grobfilterelement, ein erstes HEPA-Feinfilterelement, ein längeres Verbindungssegment und ein zweite HEPA-Feinfilterelement. Durch das erste HEPA-Feinfilterelement, das in Richtung der Abgasströmung vor dem längeren Verbindungssegment angeordnet ist, wird das längere Verbindungssegment weitestgehend frei von Partikel-Ablagerungen gehalten. Dadurch wird die Lebensdauer des längeren Verbindungssegments erhöht. Das längere Verbindungssegment kann insbesondere eine Länge von mehreren Metern haben, um die Abgassonde bequem im und/oder am Auspuff eines Verbrennungsmotors anbringen zu können.

In einer Ausführungsform beträgt die Filtereffizienz des H EPA-Feinfilters mindestens 99,9%. Der effektive Filterdurchmesser des HEPA-Feinfilters ist insbesondere so ausgewählt, dass das HEPA-Feinfilter Partikel ausfiltert, die größer als 100 nm sind.

In einer Ausführungsform sind die Filter für einen Druckunterschied von maximal 10 mbar ausgelegt.

In einer Ausführungsform ist das Gehäuse des wenigstens einen Filterelements aus einem korrosionsbeständigen Material, insbesondere einem Kunststoffmaterial ausgebildet. Insbesondere sind alle Komponenten des Abgasmesssystems, die mit den zu messenden Abgasen in Kontakt kommen, frei von metallischen Werkstoffen, um Korrosion zu vermeiden.

In einer Ausführungsform sind die Filterelemente und Filter aus einem Material, z.B. einer Borsilikat-Mikrofaser mit einem Kynar (PCDF)-Binder, gefertigt, das eine Anlagerung und spätere Ausdiffusion zu messender Gase, insbesondere HC, CO, CO₂, O₂, NOₓ, verhindert. Auf diese Weise wird eine Verfälschung der Messergebnisse durch eine Anlagerung und spätere Ausdiffusion zu messender gasfömiger Bestandteile der Abgase verhindert.

In einer Ausführungsform ist das Gehäuse des Filterelements wenigstens teilweise transparent ausgebildet, so dass eine Verschmutzung des Filters von außen sichtbar ist.

In einer Ausführungsform ist ein wenigstens teilweise transparentes (Fein-)Filterelement unmittelbar vor dem Eingang des Abgasmessgeräts angeordnet. Durch optisches Überwachen des Filters in dem wenigstens teilweise transparenten Filterelement können Rückschlüsse auf die gesamte Verbindungsvorrichtung gezogen werden. Insbesondere deutet eine zunehmende Verschmutzung des Filters, die durch das wenigstens teilweise transparente Gehäuse erkannt werden kann, darauf hin, dass in Strömungsrichtung vor dem Filterelement angeordnete Filter defekt und/oder erschöpft sind.

In einer Ausführungsform hat das wenigstens eine Filterelement ein gasdichtes Gehäuse und ist so ausgebildet, dass die Abgase das Filter von seiner Außenseite zu seiner Innenseite durchströmen. Die im Filter zurückgehaltene Partikel bilden einen dunklen Niederschlag auf dem Filter, der von außen gut sichtbar ist. Durch eine optische Prüfung des Filterelements kann daher leicht festgestellt werden, wie stark das Filter verschmutzt ist und ob das Filter ausgetauscht werden muss.

In einer Ausführungsform weist das wenigstens eine Filterelement ein Filter auf, das in Abhängigkeit von der Strömungsgeschwindigkeit einen definierten Druckunterschied hat, wobei der Druckunterschied eine obere Grenze nicht überschreitet. Die Verwendung eines solchen Filters mit definiertem Druckunterschied führt zu definierten Druck- und Strömungsverhältnissen in der Verbindungsvorrichtung, wodurch die Qualität und Zuverlässigkeit der Messergebnisse verbessert wird.

### Kurze Beschreibung der Figuren

Ein Ausführungsbeispiel der Erfindung wird im Folgenden unter Bezugnahme auf die beigefügten Figuren beschrieben.
Figur 1 zeigt eine schematische Ansicht eines Abgasmesssystems gemäß einem Ausführungsbeispiel der Erfindung.
Figur 2 zeigt eine schematische Schnittansicht eines Filterelements, wie es in einer Verbindungsvorrichtung gemäß einem Ausführungsbeispiel der Erfindung zu Einsatz kommt.

### Figurenbeschreibung

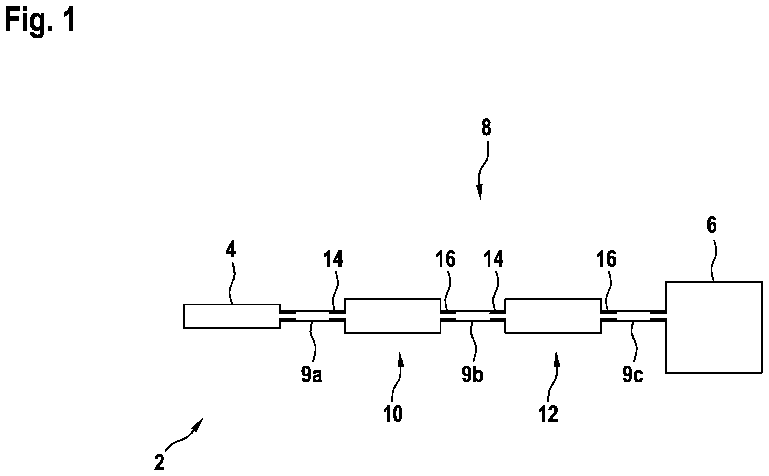

Figur 1 zeigt eine schematische Ansicht eines Abgasmesssystems 2 gemäß einem Ausführungsbeispiel der Erfindung.

Das Abgasmesssystem 2 umfasst ein Abgasmessgerät 6, eine Abgassonde 4, die zur Anordnung in oder an einem Auspuff eines (nicht gezeigten) Fahrzeugs mit Verbrennungsmotor ausgebildet ist, und eine Verbindungsvorrichtung 8, welche die Abgassonde 4 mit dem Abgasmessgerät 6 verbindet, so dass Abgase von der Abgassonde 4 in das Abgasmessgerät 6 strömen können.

Die Verbindungsvorrichtung 8 umfasst mehrere Verbindungssegmente 9a, 9b, 9c und Filterelemente 10, 12, die jeweils zwischen zwei der Verbindungssegmente 9a, 9b, 9c angeordnet sind.

Ein erstes Verbindungssegment 9a verbindet einen Ausgang der Abgassonde 4 mit einem Eingang eines ersten Filterelements 10.

Ein zweites Verbindungssegment 9b verbindet einen Ausgang des ersten Filterelements 10 mit einem Eingang eines zweiten Filterelements 12.

Ein drittes Verbindungssegment 9c verbindet eine Ausgang des zweiten Filterelements 12 mit einem Eingang des Abgasmessgeräts 6.

Das zweite Verbindungssegment 9b ist üblicherweise das längste der drei Verbindungssegmente 9a, 9b, 9c. Es kann insbesondere eine Länge von mehreren Metern haben, um die Abgassonde 4 bequem im und/oder am Auspuff des Verbrennungsmotors anbringen zu können.

Das erste und das dritte Verbindungssegment 9a, 9c können dagegen deutlich kürzer sein und insbesondere Längen von weniger als 1 m, z.B. Längen zwischen 0,25 und 0,5 m, haben.

Das erste Filterelement 10 ist insbesondere als Grobfilterelement 10 mit einem Grobfilter ausgebildet, um grobe Partikel aus dem Abgasstrom zu entfernen. Das Grobfilter kann insbesondere als kostengünstiges Papierfilter ausgebildet sein.

Das zweite Filterelement 12 ist insbesondere als Feinfilterelement 12 mit einem hocheffizienten Schwebstofffilter (HEPA-Feinfilter) ausgebildet, um feine Partikel, insbesondere alle Partikel, die einen größeren Durchmesser als 100 nm haben, aus dem Abgasstrom herauszufiltern.

Der Fachmann versteht, dass die Verbindungsvorrichtung 8 weitere Filterelemente 10, 12, insbesondere zusätzliche HEPA-Feinfilterelemente 12 und Verbindungssegmente 9a, 9b, 9c enthalten kann, um die Filterwirkung der Verbindungsvorrichtung 8 noch weiter zu erhöhen. Insbesondere kann zwischen dem zweiten Filterelement 12 und dem Abgasmessgerät 6 ein drittes (nicht in der Figur 1 gezeigtes) Filterelement vorgesehen sein, das ein zweites HEPA-Feinfilter enthält.

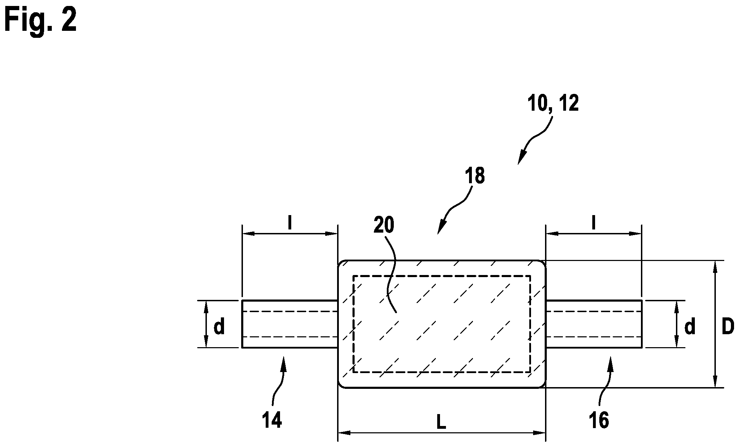

Figur 2 zeigt eine Schnittansicht eines Filterelements 10, 12 gemäß einem Ausführungsbeispiel der Erfindung. Dabei kann es sich um ein erstes Filterelement (Grobfilterelement) 10 oder um ein zweites Filterelement (Feinfilterelement) 12 handeln. Das erste Filterelement 10 und das zweite Filterelement 12 einer Verbindungsvorrichtung 8 können gleiche oder unterschiedliche Abmessungen haben.

Das Filterelement 10, 12 hat ein erstes, eingangsseitiges Ansatzstück 14 und ein zweites, ausgangsseitiges Ansatzstück 16.

Die Ansatzstücke 14, 16 sind rohrförmig ausgebildet, so dass Verbindungssegmente 9a, 9b, 9c, insbesondere schlauchförmig ausgebildete Verbindungssegmente 9a, 9b, 9c, auf die Ansatzstücke 14, 16 aufschiebbar sind.

Zwischen den koaxial ausgebildeten Ansatzstücken 14, 16 ist ein zylinderförmiges Gehäuse 18 angeordnet. Die Achse des zylinderförmigen Gehäuses 18 ist koaxial mit den Achsen der beiden rohrförmig ausgebildeten Ansatzstücke 14, 16 ausgebildet.

Das Gehäuse kann beispielsweise einen Durchmesser D von 20 mm bis 30 mm, insbesondere einen Durchmesser D von 25 mm, und eine Länge L von 40 mm bis 50 mm, insbesondere eine Länge L von 45 mm, haben. Die Ansatzstücke 14, 16 können jeweils einem Durchmesser d von 5 mm bis 7 mm, insbesondere einem Durchmesser d von 6 mm und eine Länge I von etwa 20 mm haben.

In dem Gehäuse 18 befindet sich ein Filter 20. Das Filter 20 kann ein Grob- oder Feinfilter sein, das als Papierfilter oder als HEPA-Filter ausgebildet ist.

Der Außendurchmesser der Ansatzstücke 14, 16 und der Innendurchmesser der Verbindungssegmente 9a, 9b, 9c (siehe Figur 1) sind so gewählt, dass die Verbindungssegmente 9a, 9b, 9c stramm auf den Ansatzstücken 14, 16 aufsitzen und insbesondere eine gasdichte Verbindung zwischen den Verbindungssegmenten 9a, 9b, 9c und den Ansatzstücken 14, 16 gewährleistet ist.

Auf diese Weise wird eine stabile und zuverlässige gasdichte Verbindung zwischen den Verbindungssegmenten 9a, 9b, 9c und den Ansatzstücken 14, 16 geschaffen, ohne dass dafür Werkzeuge und/oder zusätzliche Befestigungselemente erforderlich sind.

Die Gehäuse der Filterelemente 10, 12 sind gasdicht und insbesondere wenigstens teilweise transparent ausgebildet, so dass eine Verschmutzung des in dem jeweiligen Filterelement 10, 12 angeordneten Filters 20 von außen erkennbar ist.

Die Filterelemente 10, 12 sind insbesondere so ausgebildet, dass Abgase, die durch das eingangsseitige Ansatzstück 14 in das Filterelement 10, 12 eintreten, von außen nach innen durch das Filter 20 strömen.

Im Filter 20 zurückgehaltene Partikel bilden einen dunklen Niederschlag, der durch das wenigstens teilweise transparent ausgebildete Gehäuse 18 von außen sichtbar ist. Durch optische Prüfung des Filterelements 10, 12 kann daher leicht festgestellt werden, wie stark das Filter 20 verschmutzt ist und ob das Filter 20 ausgetauscht werden muss.

Ein Filterelement 10, 12 mit einem transparenten Gehäuse kann insbesondere unmittelbar vor dem Abgasmessgerät 6 angeordnet sein. Durch optische Inspektion eines unmittelbar vor dem Abgasmessgerät 6 angeordneten Filters 20 kann der Zustand der gesamten Verbindungsvorrichtung 8 überprüft werden. Eine erkennbare Verschmutzung eines unmittelbar vor dem Abgasmessgerät 6 angeordneten Filters 20 lässt darauf schließen, dass die stromaufwärts angeordneten Filterelemente 10, 12 defekt oder erschöpft sind und überprüft und ggf. ausgetauscht werden sollten.

Die Filterelemente 10, 12, die Filter 20 und die Verbindungssegmente 9a, 9b, 9c sind vorzugsweise aus einem metallfreien Material gefertigt, um Korrosion durch die Abgase zur vermeiden.

Die Filterelemente 10, 12, die Filter 20 und die Verbindungssegmente 9a, 9b, 9c sind insbesondere aus einem Material gefertigt, das eine Anlagerung und spätere Ausdiffusion zu messender Gase, insbesondere HC, CO, CO₂, O₂ und NOₓ, verhindert. Auf diese Weise wird eine Verfälschung der Messergebnisse durch Anlagerung und nachfolgende Ausdiffusion zu messender gasförmiger Bestandteile der Abgase verhindert.

Um dies zu erreichen, können die Filter 20 beispielsweise aus einer Borsilikat-Mikrofaser mit einem Kynar (PCDF)-Binder gefertigt sein

Das Filter 20 kann insbesondere so ausgebildet sein, dass es einen definierten Druckunterschied aufweist, der von der Strömungsgeschwindigkeit abhängt und der eine vorgegebene Obergrenze nicht überschreitet. Die Verwendung eines solche Filters 20 hat definierte Druck- und Strömungsverhältnisse in der Verbindungsvorrichtung 8 zur Folge. Dadurch wird verhindert, dass die Messergebnisse durch Druck- und/oder Strömungsschwankungen in der Verbindungsvorrichtung 8 verfälscht werden. Die Qualität und Zuverlässigkeit der Messergebnisse wird so verbessert.

Durch die Auswahl spezieller Filter 10, 12 und deren Anordnung in der Verbindungsvorrichtung 8 zwischen der Abgassonde 4 und dem Abgasmessgerät 6 werden viele Nachteile herkömmlicher Abgasmesssysteme vermieden.

Beispielsweise können die Kosten des Abgasmesssystems 2 deutlich reduziert und seine Wartungsintervalle vergrößert werden.

Ein Abgasmesssystem 2 zur Messung von Gaskonzentrationen in einem partikelbehafteten Abgasstrom gemäß Ausführungsbeispielen der Erfindung kann insbesondere in Werkstätten eingesetzt werden.

Ein Abgasmesssystem 2 gemäß Ausführungsbeispielen der Erfindung ermöglicht Gasmessungen, die vollumfänglich den Anforderungen internationaler Normen, beispielsweise der OIML R 99, entsprechen. Das Abgasmesssystem 2 kann daher auch bei amtlichen Prüfungen, zum Beispiel im Rahmen der periodischen Fahrzeughauptuntersuchung, zum Einsatz kommen.

## Patentansprüche

1. Verbindungsvorrichtung (8) zum Verbinden einer Abgassonde (4) mit einem Abgasmessgerät (6), um eine Abgasströmung von der Abgassonde (4) zu dem Abgasmessgerät (6) zu ermöglichen, wobei die Verbindungsvorrichtung (8) wenigstens ein in die Verbindungsvorrichtung (8) integriertes Filterelement (10, 12) umfasst,
wobei wenigstens ein in die Verbindungsvorrichtung (8) integriertes Filterelement (12) ein HEPA-Feinfilter (20) enthält, **dadurch gekennzeichnet, dass** die Verbindungsvorrichtung (8) mehrere Verbindungssegmente (9a, 9b, 9c) und Filterelemente (10, 12) umfasst, wobei die Filterelemente (10,12) jeweils zwischen zwei der Verbindungssegmente (9a, 9b, 9c) angeordnet sind, wobei ein zweites Verbindungssegment (9b) einen Ausgang eines ersten Filterelements (10) mit einem Eingang eines zweiten Filterelements (12) verbindet und das längste der drei Verbindungssegmente (9a, 9b, 9c) ist.

2. Verbindungsvorrichtung (8) nach Anspruch 1, wobei das wenigstens eine Filterelement (10, 12) wenigstens ein Ansatzstück (14, 16) aufweist und wobei wenigstens ein Verbindungssegment (9a, 9b, 9c) auf das wenigstens eine Ansatzstück (14, 16) aufgeschoben ist.

3. Verbindungsvorrichtung (8) nach einem der vorangehenden Ansprüche, wobei das wenigstens eine Verbindungssegment (9a, 9b, 9c) ein Schlauchsegment ist.

4. Verbindungsvorrichtung (8) nach einem der vorangehenden Ansprüche, wobei wenigstens ein Filterelement (10, 12) ein Papierfilter enthält.

5. Verbindungsvorrichtung (8) nach einem der vorangehenden Ansprüche, wobei das wenigstens eine Filterelement (10, 12) ein gasdichtes und/oder ein wenigstens teilweise transparentes Gehäuse aufweist.

6. Verbindungsvorrichtung (8) nach einem der vorangehenden Ansprüche, wobei das wenigstens eine Filterelement (10, 12) so ausgebildet ist, dass das Filter (20) von seiner Außenseite zu seiner Innenseite durchströmt wird.

7. Verbindungsvorrichtung (8) nach einem der vorangehenden Ansprüche, wobei die Filterelemente (10, 12) und Filter (20) aus einem metallfreien Material gefertigt sind, insbesondere aus einem Material, das eine Anlagerung und nachfolgende Ausdiffusion der zu messenden Gase, insbesondere von HC, CO, CO₂, O₂, NOₓ, verhindert.

8. Verbindungsvorrichtung (8) nach einem der vorangehenden Ansprüche, wobei das wenigstens eine Filterelement (10, 12) ein Filter (20) aufweist, wobei das Filter (20) einen definierten Druckunterschied in Abhängigkeit der Strömungsgeschwindigkeit aufweist, der eine obere Grenze nicht überschreitet.

9. Abgasmesssystem mit einem Abgasmessgerät (6), einer Abgassonde (4) und einer Verbindungsvorrichtung (8) nach einem der vorangehenden Ansprüche, wobei die Verbindungsvorrichtung (8) die Abgassonde (4) mit einem Eingang des Abgasmessgeräts (6) verbindet, um eine Abgasströmung von der Abgassonde (4) in das Abgasmessgerät (6) zu ermöglichen.

10. Abgasmesssystem (2) nach Anspruch 9, wobei ein HEPA-Feinfilterelement (12) unmittelbar vor dem Eingang des Abgasmessgeräts (6) angeordnet ist.

11. Abgasmesssystem (2) nach Anspruch 9 oder 10, wobei das Abgasmessgerät (6) zur Messung von Abgasen eines Ottomotors ausgebildet ist.

12. Verwenden eine Abgasmesssystems (2) nach einem der Ansprüche 9 bis 11 zum Messen von Abgasen eines Dieselmotors

## Claims

1. Connecting device (8) for connecting an exhaust-gas probe (4) to an exhaust-gas measuring apparatus (6) in order to allow an exhaust-gas flow from the exhaust-gas probe (4) to the exhaust-gas measuring apparatus (6), wherein the connecting device (8) comprises at least one filter element (10, 12) integrated into the connecting device (8),
wherein at least one filter element (12) integrated into the connecting device (8) contains a HEPA fine filter (20), **characterized in that** the connecting device (8) comprises a plurality of connecting segments (9a, 9b, 9c) and filter elements (10, 12), wherein the filter elements (10, 12) are each arranged between two of the connecting segments (9a, 9b, 9c), wherein a second connecting segment (9b) connects an output of a first filter element (10) to an input of a second filter element (12) and is the longest of the three connecting segments (9a, 9b, 9c).

2. Connecting device (8) according to Claim 1, wherein the at least one filter element (10, 12) has at least one attachment piece (14, 16), and wherein at least one connecting segment (9a, 9b, 9c) is pushed onto the at least one attachment piece (14, 16).

3. Connecting device (8) according to either of the preceding claims, wherein the at least one connecting segment (9a, 9b, 9c) is a hose segment.

4. Connecting device (8) according to any of the preceding claims, wherein at least one filter element (10, 12) contains a paper filter.

5. Connecting device (8) according to any of the preceding claims, wherein the at least one filter element (10, 12) has a gas-tight and/or an at least partially transparent housing.

6. Connecting device (8) according to any of the preceding claims, wherein the at least one filter element (10, 12) is designed such that gas flows through the filter (20) from its outer side to its inner side.

7. Connecting device (8) according to any of the preceding claims, wherein the filter elements (10, 12) and filter (20) are produced from a metal-free material, in particular from a material which prevents accumulation and subsequent outdiffusion of the gases to be measured, in particular HC, CO, CO₂, O₂, NOₓ.

8. Connecting device (8) according to any of the preceding claims, wherein the at least one filter element (10, 12) has a filter (20), wherein the filter (20) has a defined pressure difference, which does not exceed an upper limit, depending on the flow rate.

9. Exhaust-gas measuring system having an exhaust-gas measuring apparatus (6), an exhaust-gas probe (4) and a connecting device (8) according to any of the preceding claims, wherein the connecting device (8) connects the exhaust-gas probe (4) to an input of the exhaust-gas measuring apparatus (6) in order to allow exhaust-gas flow from the exhaust-gas probe (4) into the exhaust-gas measuring apparatus (6).

10. Exhaust-gas measuring system (2) according to Claim 9, wherein a HEPA fine filter element (12) is arranged directly upstream of the input of the exhaust-gas measuring apparatus (6).

11. Exhaust-gas measuring system (2) according to Claim 9 or 10, wherein the exhaust-gas measuring apparatus (6) is designed to measure exhaust gases from a petrol engine.

12. Use of an exhaust-gas measuring system (2) according to any of Claims 9 to 11 for measuring exhaust gases from a diesel engine.

## Revendications

1. Dispositif de liaison (8) pour relier une sonde de gaz d'échappement (4) à un appareil de mesure de gaz d'échappement (6) afin de permettre un écoulement de gaz d'échappement de la sonde de gaz d'échappement (4) à l'appareil de mesure de gaz d'échappement (6), le dispositif de liaison (8) comprenant au moins un élément filtrant (10, 12) intégré dans le dispositif de liaison (8),
au moins un élément filtrant (12) intégré dans le dispositif de liaison (8) contenant un filtre fin HEPA (20), **caractérisé en ce que** le dispositif de liaison (8) comprend plusieurs segments de liaison (9a, 9b, 9c) et éléments filtrants (10, 12), les éléments filtrants (10, 12) étant respectivement agencés entre deux des segments de liaison (9a, 9b, 9c), un deuxième segment de liaison (9b) reliant une sortie d'un premier élément filtrant (10) à une entrée d'un deuxième élément filtrant (12) et étant le plus long des trois segments de liaison (9a, 9b, 9c).

2. Dispositif de liaison (8) selon la revendication 1, dans lequel l'au moins un élément filtrant (10, 12) présente au moins un embout (14, 16) et dans lequel au moins un segment de liaison (9a, 9b, 9c) est enfilé sur l'au moins un embout (14, 16).

3. Dispositif de liaison (8) selon l'une quelconque des revendications précédentes, dans lequel l'au moins un segment de liaison (9a, 9b, 9c) est un segment de tuyau.

4. Dispositif de liaison (8) selon l'une quelconque des revendications précédentes, dans lequel au moins un élément filtrant (10, 12) contient un filtre en papier.

5. Dispositif de liaison (8) selon l'une quelconque des revendications précédentes, dans lequel l'au moins un élément filtrant (10, 12) présente un boîtier étanche aux gaz et/ou au moins partiellement transparent.

6. Dispositif de liaison (8) selon l'une quelconque des revendications précédentes, dans lequel l'au moins un élément filtrant (10, 12) est configuré de telle sorte que le filtre (20) est traversé de son côté extérieur vers son côté intérieur.

7. Dispositif de liaison (8) selon l'une quelconque des revendications précédentes, dans lequel les éléments filtrants (10, 12) et les filtres (20) sont fabriqués dans un matériau exempt de métal, notamment dans un matériau qui empêche un dépôt et une diffusion ultérieure des gaz à mesurer, notamment HC, CO, CO₂, O₂, NOₓ.

8. Dispositif de liaison (8) selon l'une quelconque des revendications précédentes, dans lequel l'au moins un élément filtrant (10, 12) présente un filtre (20), le filtre (20) présentant une différence de pression définie en fonction de la vitesse d'écoulement, qui ne dépasse pas une limite supérieure.

9. Système de mesure de gaz d'échappement avec un appareil de mesure de gaz d'échappement (6), une sonde de gaz d'échappement (4) et un dispositif de liaison (8) selon l'une quelconque des revendications précédentes, dans lequel le dispositif de liaison (8) relie la sonde de gaz d'échappement (4) à une entrée de l'appareil de mesure de gaz d'échappement (6) afin de permettre un écoulement de gaz d'échappement de la sonde de gaz d'échappement (4) dans l'appareil de mesure de gaz d'échappement (6).

10. Système de mesure de gaz d'échappement (2) selon la revendication 9, dans lequel un élément de filtre fin HEPA (12) est agencé juste avant l'entrée de l'appareil de mesure de gaz d'échappement (6).

11. Système de mesure de gaz d'échappement (2) selon la revendication 9 ou 10, dans lequel l'appareil de mesure de gaz d'échappement (6) est configuré pour mesurer les gaz d'échappement d'un moteur à allumage par étincelle.

12. Utilisation d'un système de mesure de gaz d'échappement (2) selon l'une quelconque des revendications 9 à 11 pour mesurer les gaz d'échappement d'un moteur diesel.
